# EUROPEAN PATENT APPLICATION

(11) **EP 4 145 300 A1**
(43) Date of publication of application: **08.03.2023**
(21) Application number: 21816738.5
(22) Date of filing: 11.05.2021
(51) Int. Cl.: G06F 16/29

(54) **METHOD AND APPARATUS FOR PROCESSING ORDER DATA**

(30) Priority: 05.06.2020 CN 202010505474
(71) Applicant: Beijing Jingdong Zhenshi Information Technology Co., Ltd., Beijing, Beijing 100086 (CN)
(72) Inventor: GAO, Yaofei, Beijing 100086 (CN)
(74) Representative: FDST Patentanwälte
(86) International application number: PCT/CN2021/092999
(87) International publication number: WO 2021/244233

(57) **Abstract**

Disclosed are a method and apparatus for processing order data, relating to the technical field of logistics delivery. One specific implementation mode of the method comprises: receiving a plurality of order identifiers uploaded by a terminal, acquiring a user identifier and delivery address information corresponding to each of the order identifiers, and storing the user identifier and the delivery address information in an order master table; screening an order identifier to be parsed that lacks essential information in the delivery address information from the order master table; adding, in accordance with the corresponding relationship between each user identifier and each piece of detailed address information stored in an address library table, the essential information in the delivery address information corresponding to each of the order identifiers to be parsed so as to update the order master table; and performing path optimization on the basis of the updated delivery address information of each order in the order master table, and sending an optimization result to the terminal. The implementation mode can solve the technical problem of low delivery efficiency.

## Description

The application claims priority to CN Patent Application for Invention No. 202010505474.7, entitled "Method and Apparatus for Processing Order Data", which was filed on June 5, 2020, and the content of which is hereby incorporated by reference in its entirety.

### Technical Field

The disclosure relates to the technical field of logistics delivery, and in particular relates to a method and apparatus for processing order data.

### Background

If there are a comparatively large number of goods, when going upstairs to deliver the goods, the courier usually puts the goods in a small cart, and then delivers the goods one user by one user. Sometimes there are a comparatively large number of goods, so it is difficult to find the optimal delivery path, and the courier generally relies on memory to deliver the goods.

In the process of implementing the disclosure, the inventor finds that there are at least the following problems in the existing art:
If the courier can't remember to which floors or households the goods are to be delivered, it is required to check the goods one by one again till it is confirmed to which floors the goods are to be delivered, and if there are a slightly large number of goods to be delivered, the delivery efficiency will be seriously affected.

The delivery address filled in by the user is not detailed enough or lacks essential information, so that the courier cannot find the specific room number correctly and cannot provide a home delivery service in time, and it is required to make a phone call to make confirmation with the user, which will also seriously affect the delivery efficiency.

### Summary

In view of this, the embodiment of the disclosure provides a method and apparatus for processing order data so as to solve the technical problem of low delivery efficiency.

In order to achieve the aforesaid object, according to one aspect of the embodiment of the disclosure, a method for processing order data is provided, the method comprising:
receiving a plurality of order identifiers uploaded by a terminal, acquiring a user identifier and delivery address information corresponding to each of the order identifiers, and storing the user identifier and the delivery address information in an order master table;
screening an order identifier to be parsed that lacks essential information in the delivery address information from the order master table;
adding, in accordance with the corresponding relationship between each user identifier and each piece of detailed address information stored in an address library table, the essential information in the delivery address information corresponding to each of the order identifiers to be parsed so as to update the order master table; and
performing path optimization on the basis of the updated delivery address information of each order in the order master table, and sending an optimization result to the terminal.

Optionally, adding, in accordance with the corresponding relationship between each user identifier and each piece of detailed address information stored in an address library table, the essential information in the delivery address information corresponding to each of the order identifiers to be parsed so as to update the order master table comprises:
matching, for each of the order identifiers to be parsed, detailed address information corresponding to the order identifier to be parsed from the corresponding relationship between each user identifier and each piece of detailed address information stored in the address library table on the basis of the user identifier and the delivery address information corresponding to the order identifier to be parsed; and
adding, in accordance with the matched detailed address information, the essential information in the delivery address information corresponding to the order identifier to be parsed so as to update the order master table.

Optionally, adding, in accordance with the corresponding relationship between each user identifier and each piece of detailed address information stored in an address library table, the essential information in the delivery address information corresponding to each of the order identifiers to be parsed so as to update the order master table further comprises:
parsing the delivery address information corresponding to the order identifier to be parsed on the basis of a preset address writing rule if the matching result is null;
adding, in accordance with a parsing result, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

Optionally, adding, in accordance with the corresponding relationship between each user identifier and each piece of detailed address information stored in an address library table, the essential information in the delivery address information corresponding to each of the order identifiers to be parsed so as to update the order master table further comprises:
receiving the order identifier to be parsed uploaded by the terminal and address editing information corresponding thereto if there is a failure in parsing;
adding, in accordance with the address editing information, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

Optionally, performing path optimization on the basis of the updated delivery address information of each order in the order master table comprises:
arranging each order in the order master table in an ascending order on the basis of the updated delivery address information of each order in the order master table to thereby generate a delivery queue.

Optionally, performing path optimization on the basis of the updated delivery address information of each order in the order master table further comprises:
arranging orders that lack essential information in the delivery address information in the order master table at the end of the delivery queue.

Optionally, the essential information includes at least one of a building number, a unit number, a floor number, and a room number.

In addition, according to another aspect of the embodiment of the disclosure, an apparatus for processing order data is provided, the apparatus comprising:
a storing module for receiving a plurality of order identifiers uploaded by a terminal, acquiring a user identifier and delivery address information corresponding to each of the order identifiers, and storing the user identifier and the delivery address information in an order master table;
a screening module for screening an order identifier to be parsed that lacks essential information in the delivery address information from the order master table;
an adding module for adding, in accordance with the corresponding relationship between each user identifier and each piece of detailed address information stored in an address library table, the essential information in the delivery address information corresponding to each of the order identifiers to be parsed so as to update the order master table; and
an optimizing module for performing path optimization on the basis of the updated delivery address information of each order in the order master table, and sending an optimization result to the terminal.

According to another aspect of the embodiment of the disclosure, an electronic device is further provided, the electronic device comprising:
one or more processors;
a memory for storing one or more programs,
the one or more programs, when executed by the one or more processors, causing the one or more processors to implement the method according to any of the aforesaid embodiments.

According to another aspect of the embodiment of the invention, a computer-readable medium, on which a computer program is stored, is further provided, the program, when executed by a processor, implementing the method according to any of the aforesaid embodiments.

The aforesaid one embodiment in the disclosure has the following advantages or beneficial effects: thanks to adoption of a technical means of adding, in accordance with the corresponding relationship between each user identifier and each piece of detailed address information stored in an address library table, the essential information in the delivery address information corresponding to each order identifier to be parsed, and performing path optimization on the delivery address information after the addition of the essential information, the technical problem of low delivery efficiency in the existing art is overcome. The embodiment of the disclosure, which adds the essential information in the delivery address information by the corresponding relationship between each user identifier and each piece of detailed address information stored in an address library table, saves a step of determining a detailed address between the courier and the user, and thus improves the delivery efficiency of the courier; and further improves the delivery efficiency of the courier by performing path optimization on information such as a building number, a unit number, a floor number, and a room number.

Further effects of the aforesaid non-conventional optional manners will be described below in combination with specific implementation modes.

### Brief Description of the Drawings

Figures are used to better understand the disclosure, and do not form improper limitations of the disclosure. Where:
FIG. 1 is a schematic diagram of a main flow of a method for processing order data according to an embodiment of the disclosure;
FIG. 2 is a schematic diagram of a list of orders subjected to parsing failures according to an embodiment of the disclosure;
FIG. 3 is a schematic diagram of an address editing detail page according to an embodiment of the disclosure;
FIG. 4 is a schematic diagram of a batch scheduling page according to an embodiment of the disclosure;
FIG. 5 is a schematic diagram of a delivery navigation page according to an embodiment of the disclosure;
FIG. 6 is a schematic diagram of a main flow of a method for processing order data according to a referable embodiment of the disclosure;
FIG. 7 is a schematic diagram of main modules of an apparatus for processing order data according to an embodiment of the disclosure;
FIG. 8 is an exemplary diagram of a system architecture to which an embodiment of the disclosure can be applied; and
FIG. 9 is a schematic diagram of a structure of a computer system suitable for implementing a terminal device or a server according to an embodiment of the disclosure.

### Detailed Description of an embodiment

The exemplary embodiments of the disclosure, including various details of the embodiments of the disclosure, are described below in combination with the figures to facilitate understanding, and shall be considered to be exemplary ones only. Thus, those skilled in the art should recognize that various changes and modifications may be made to the embodiments described herein without departing from the scope and spirit of the disclosure. Similarly, for clarity and conciseness, descriptions of well-known functions and structures are omitted in the descriptions below.

At present, a courier is required to arrange a delivery sequence in advance when providing home delivery services, and there is no optimized floor path plan, which may result in missing a certain floor and repeatedly going to a certain floor, resulting in low delivery efficiency. Moreover, after completion of delivery of a batch of goods, it is impossible to check which packages have been delivered and which packages have not been delivered, which is inconvenient for data aggregation. For a user with an incomplete address, if the delivery address is not modified in time, the courier needs to confirm the detailed address with the user by a phone call or a text message each time, and the process is very cumbersome, which results in a decline in delivery efficiency.

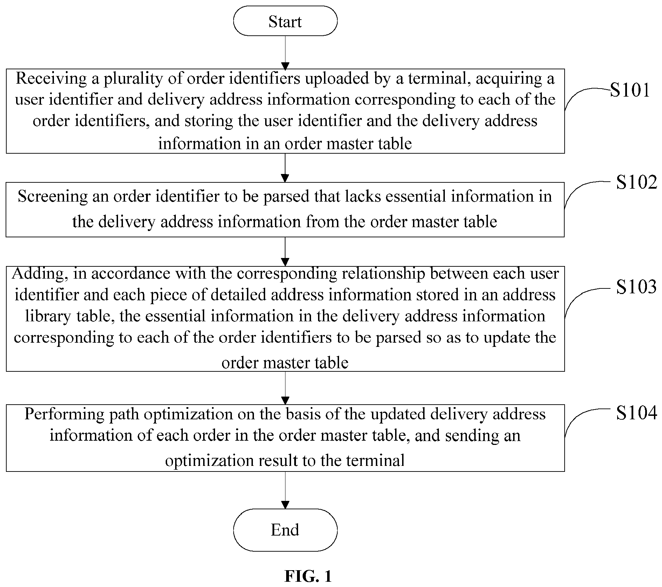

FIG. 1 is a schematic diagram of a main flow of a method for processing order data according to an embodiment of the disclosure. As an embodiment of the disclosure, as shown in FIG. 1, the method for processing order data may comprise:
Step 101: receiving a plurality of order identifiers uploaded by a terminal, acquiring a user identifier and delivery address information corresponding to each of the order identifiers, and storing the user identifier and the delivery address information in an order master table.

After arriving at the community, the courier scans the orders of a certain building or several buildings (of course, if there are not many goods for the whole community, the courier may scan all of the goods not according to the building number), or even randomly take out several orders for scanning, the courier may decide the number of parcels to be delivered at a time, and the waybills of these parcels are called a batch. The courier may perform scanning by a delivery terminal carried therewith, or by a mobile phone, or by another terminal, and then the terminal uploads the order identifiers of the scanned parcels to the server.

After receiving a batch of order identifiers uploaded by the terminal, the server calls the order system to query a user identifier (such as user PIN) and delivery address information corresponding to each order identifier, and then stores the order identifier as well as the user identifier and the delivery address information corresponding thereto in the order master table, and at this time, the state of each order is 0, which indicates that the order is not parsed. In the embodiment of the disclosure, the order system, which is one of the core systems of the delivery system, is an order pool that stores all pieces of order information.

Optionally, the order master table may include the following fields: user PIN (pin), order number (order_no), delivery address (address), building number (building_no), unit number (unit), room number (room _no), and state (state). It shall be pointed out that the delivery address information obtained from the order system is filled in by the user, and there may be a lack of essential information, e.g., the information such as the floor number or the room number is not filled in, so no information is filled in these missing fields, and the essential information is added to the corresponding fields by the subsequent steps. Generally, the room number includes the floor number. Optionally, the field of the floor number may be also added, which is not limited in the embodiment of the disclosure.

It shall be noted that the courier having arrived at the community corresponds to that the courier has determined the community information of each order, so the embodiment of the application performs information addition and path optimization on the building number, the unit number, the floor number and the room number that are more detailed to thereby improve the delivery efficiency of the courier in the community.

Step 102: screening an order identifier to be parsed that lacks essential information in the delivery address information from the order master table.

After the delivery address information is stored in the order master table, asynchronous parsing (step 102) and addition of essential information (step 103) for each piece of delivery address information in the order master table are started. Optionally, the order identifier to be parsed that lacks essential information in the delivery address information may be screened by querying respective fields in the order master table. Optionally, the essential information includes at least one of a building number, a unit number, a floor number, and a room number. For example, in the delivery address information of the screened order identifier to be parsed, there is a lack of the room number, there is a lack of both the unit number and the room number, or there is a lack of all of the building number, the unit number and the room number.

Step 103: adding, in accordance with the corresponding relationship between each user identifier and each piece of detailed address information stored in an address library table, the essential information in the delivery address information corresponding to each of the order identifiers to be parsed so as to update the order master table.

In the embodiment of the disclosure, the corresponding relationship between each user identifier and each piece of detailed address information, the building number, the unit number, the room number, and so on, is stored in an address library table. Optionally, the address library table may include the following fields: user PIN (pin), order number (order_no), detailed address information (address), building number (building_no), unit number (unit), and room number (room_no).

Optionally, step 103 may comprise: matching, for each of the order identifiers to be parsed, detailed address information corresponding to the order identifier to be parsed from the corresponding relationship between each user identifier and each piece of detailed address information stored in the address library table on the basis of the user identifier and the delivery address information corresponding to the order identifier to be parsed; and adding, in accordance with the matched detailed address information, the essential information in the delivery address information corresponding to the order identifier to be parsed so as to update the order master table. Since the detailed address information is stored in the address library table, it is possible to match detailed address information corresponding to the order identifier to be parsed from the address library table by the user identifier and the delivery address information corresponding to the order identifier to be parsed, and then add, in accordance with the building number (building _no), the unit number (unit), the room number (room _no), and so on corresponding to the detailed address information, the essential information in the delivery address information corresponding to the order identifier to be parsed.

For example, the delivery address information corresponding to the order identifier to be parsed is "Lane 2, Nanhai Jiayuan, Daxing District, Beijing", where there is a lack of information, and a result is matched from the address library table by the user PIN and "Lane 2, Nanhai Jiayuan, Daxing District, Beijing" as follows: Room 301, Unit 2, the building number 1, Lane 2, Nanhai Jiayuan, Daxing District, Beijing. The fields such as the building number (building _no), the unit number (unit), and the room number (room no) corresponding to the result are 1, 2, and 301, respectively, and then the digits of the fields are filled in the corresponding fields in the order master table, respectively to achieve the addition of the essential information. Then, even if there is a lack of information in the delivery address filled in by the user, the server may add the essential information in accordance with the detailed address in the address library table, and accurately position the information such as the building number, the unit number, and the room number of the location of the user, which saves a step of determining a detailed address between the courier and the user, and thus improves the delivery efficiency of the courier.

It shall be pointed out that the embodiment of the application only adds the missing fields in the delivery address information. For example, if the missing filed in the delivery address information is the room number, only the room number is added. Generally, the detailed address information is more detailed than the delivery address information, so the detailed address information may be found by query in the address library table in accordance with the user identifier and the delivery address information.

Optionally, step 103 further comprises: parsing the delivery address information corresponding to the order identifier to be parsed on the basis of a preset address writing rule if the matching result is null; adding, in accordance with a parsing result, the essential information in the delivery address information corresponding to the order identifier to be parsed so as to update the order master table; and writing the corresponding relationship between the user identifier corresponding to the order identifier to be parsed and the delivery address information after the addition of the essential information into the address library table.

If the matching result is null or no unique piece of detailed address information can be matched, it indicates a failure in matching, so the delivery address information that lacks essential information is parsed on the basis of a preset address writing rule, then the essential information is added in accordance with the parsing result, and finally the corresponding relationship between the order identifier to be parsed and the delivery address information after the addition of the essential information is written into the address library table, so that a result can be matched from the address library table in the next delivery .

In the embodiment of the disclosure, effective address information is obtained by parsing by some common address writing rules such as Unit ***, Building No. ***, or Unit ***, Building #***. To be specific, the writing rules commonly used by the users may be obtained by statistics by methods such as big data analysis so as to improve the parsing success rate.

After the achievement of the information addition, the order state (state) is marked as 1, which indicates that the order has been parsed and the information is complete.

Optionally, step 103 further comprises: receiving the order identifier to be parsed uploaded by the terminal and address editing information corresponding thereto if there is a failure in parsing; adding, in accordance with the address editing information, the essential information in the delivery address information corresponding to the order identifier to be parsed so as to update the order master table; and writing the corresponding relationship between the user identifier corresponding to the order identifier to be parsed and the delivery address information after the addition of the essential information into the address library table.

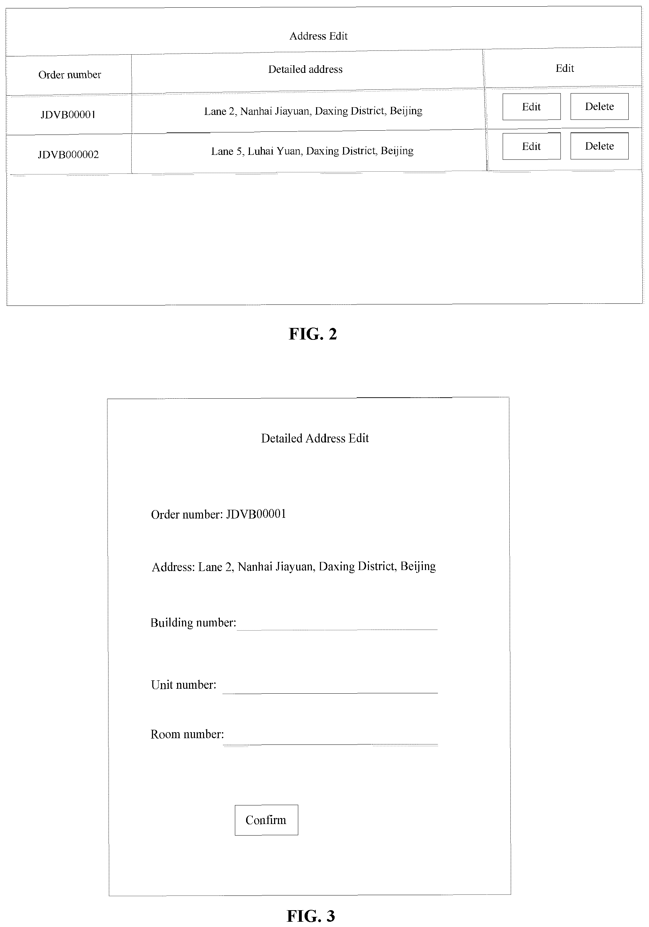

If the previous two manners both fail to add the essential information, a manual intervention stage is entered next. To be specific, the courier enters the address editing page by the terminal, and all the orders without correctly parsed addresses (state=0) may be seen, as shown in FIG. 2. The courier randomly selects an order, and clicks "Edit" to enter the address editing detail page, as shown in FIG. 3. The courier may get in touch with the user offline to obtain the correct detailed address information, input the information into the page, and upload the edited information to the server. The server receives the order identifier to be parsed uploaded by the terminal and the address editing information corresponding thereto (that is, the detailed address information input by the courier), then adds the address editing information to the order master table, and writes the corresponding relationship between the user identifier and the detailed address information after the addition of the address editing information into the address library table, so that a correct match can be made when the user places an order next time. This step, which seems cumbersome, is actually very practical. After several times of maintenance, a delivery range in the charge of a courier can be basically completely covered. In the embodiment of the disclosure, by maintaining the address library table, even if the delivery address information of the user has not been modified, the detailed address information of the user can be easily obtained in the next delivery.

Step 104: performing path optimization on the basis of the updated delivery address information of each order in the order master table, and sending an optimization result to the terminal.

After the achievement of the information addition, the server performs path optimization on the basis of the updated delivery address information of all undelivered orders in the order master table, and then sends an optimization result to the terminal. Optionally, step 104 may comprise: arranging each order in the order master table in an ascending order on the basis of the updated delivery address information of each order in the order master table to thereby generate a delivery queue.

Optionally, step 104 may further comprise: arranging orders that lack essential information in the delivery address information in the order master table at the end of the delivery queue. After step 103, there may be still orders that lack essential information, and then these orders that lack essential information are arranged at the end of the delivery queue to prevent the orders from affecting the delivery efficiency of the entire batch.

It shall be pointed out that in step 103, if the courier does not want to perform maintenance, or wants to perform maintenance in free time after entering the manual intervention, it is also permitted, and the server will arrange such orders entering manual optimization at the end of the delivery queue during the path optimization.

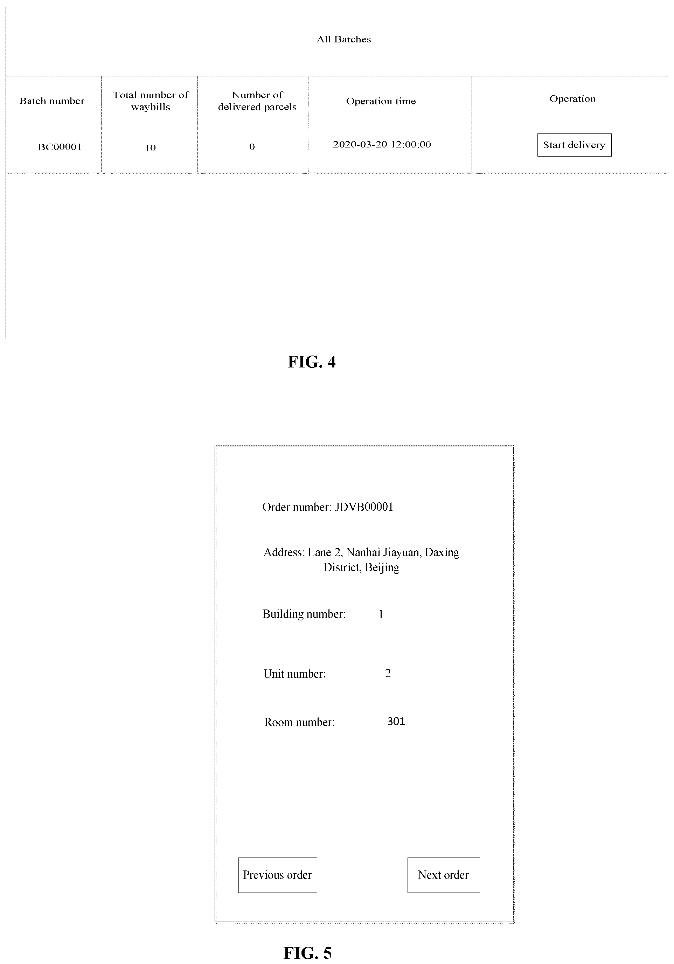

After achieving scanning the parcels in a delivery batch, the courier can enter the batch scheduling page, as shown in FIG. 4. After "Start delivery" is clicked, the server performs path optimization, and performs the last parsing in the address library manner on the orders, for which address matching has not been achieved, in the batch, and meanwhile the orders in this batch will be arranged in an ascending order in accordance with the building number, the unit number, the floor number, and the room number. Thus, a comparatively optimized delivery path is achieved, which may allow the courier to deliver goods from the first floor, so that the higher floor the courier goes to, the less the goods in the cart are. Meanwhile, the courier is only required to perform the delivery by following the guidelines as shown in FIG. 5, which reduces the time to check the next delivery position. The optimized delivery plan is to perform the arrangement in an ascending manner in accordance with the building number, in accordance with the unit number for the same building number, in accordance with the floor number for the same unit number, and in accordance with the room number for the same floor number.

After the courier enters a delivery batch and clicks "Start delivery", the page jumps to the "delivery navigation page", as shown in FIG. 5. The courier is only required to perform the operation by following the prompts on the delivery navigation page of the terminal, and can see the address of the nearest user for whom the goods are to be delivered for delivery by clicking the next order.

It may be seen according to the aforesaid various embodiments that the embodiment of the disclosure solves the technical problem of low delivery efficiency in the existing art by a technical means of adding, in accordance with the corresponding relationship between each user identifier and each piece of detailed address information stored in an address library table, the essential information in the delivery address information corresponding to each order identifier to be parsed, and performing path optimization on the delivery address information after the addition of the essential information. The embodiment of the disclosure, which adds the essential information in the delivery address information by the corresponding relationship between each user identifier and each piece of detailed address information stored in an address library table, saves a step of determining a detailed address between the courier and the user, and thus improves the delivery efficiency of the courier; and further improves the delivery efficiency of the courier by performing path optimization on information such as a building number, a unit number, a floor number, and a room number.

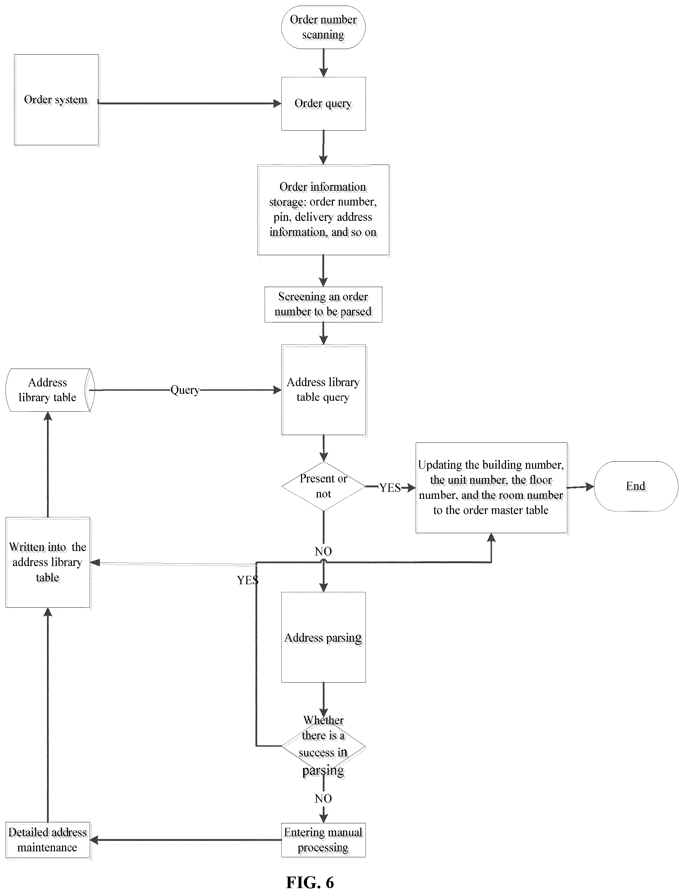

FIG. 6 is a schematic diagram of a main flow of a method for processing order data according to a referable embodiment of the disclosure. As a further embodiment of the disclosure, as shown in FIG. 6, the address parsing flow in the method for processing order data may comprise the following steps:
After arriving at the community, the courier scans the orders of a certain building or several building by a delivery terminal carried therewith, and then uploads the several scanned order numbers to the server.

The server receives the order numbers uploaded by the terminal, queries a user pin and delivery address information corresponding to each order number by calling the order system, and then stores the information such as the order number, the user pin and the delivery address information in the order master table.

The server screens an order number to be parsed that lacks essential information in the delivery address information from the order master table.

The server judges whether there is detailed address information matching the user pin and the delivery address information in the address library table on the basis of the user pin and the delivery address information corresponding to the order number to be parsed; if so, adding, in accordance with the matched detailed address information, the essential information in the delivery address information corresponding to the order number to be parsed so as to update the order master table; if not, parsing the delivery address information corresponding to the order number to be parsed on the basis of a preset address writing rule.

If there is a success in parsing, the essential information in the delivery address information corresponding to the order number to be parsed is added so as to update the order master table, and then the corresponding relationship between the user pin corresponding to the order number to be parsed and the delivery address information after the addition of the essential information is written into the address library table.

If there is a failure in parsing, manual processing is entered. The courier may get in touch with the user offline to obtain the correct detailed address information, use the information as the address editing information, and uploads the address editing information to the server.

After receiving the order number to be parsed uploaded by the terminal and the address editing information corresponding thereto, the essential information in the delivery address information corresponding to the order number to be parsed is added in accordance with the address editing information so as to update the order master table, and then the corresponding relationship between the user pin corresponding to the order number to be parsed and the delivery address information after the addition of the essential information is written into the address library table.

In addition, specific implementation contents of a method for processing order data according to a referable embodiment of the disclosure have been described in detail in the method for processing order data described above, so no repeated contents are further described herein.

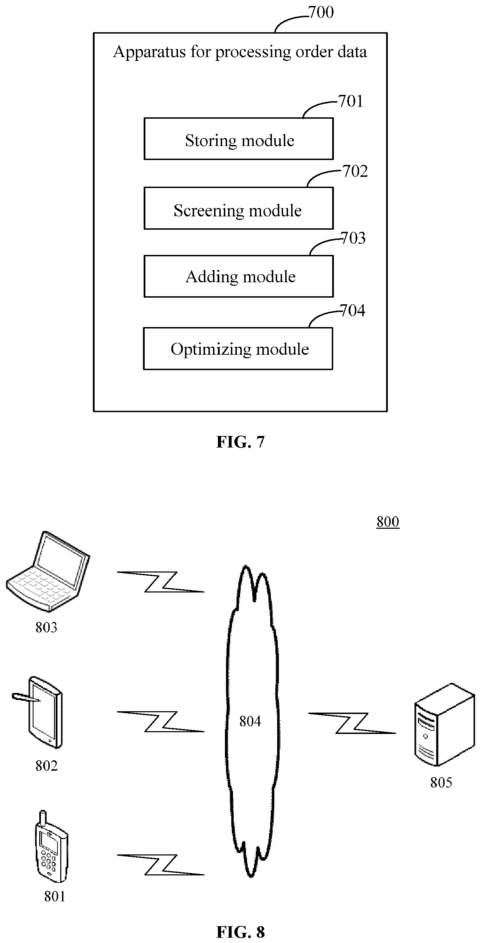

FIG. 7 is a schematic diagram of main modules of an apparatus for processing order data according to an embodiment of the disclosure. As shown in FIG. 7, the apparatus for processing order data 700 comprises a storing module 701, a screening module 702, an adding module 703 and an optimizing module 704; wherein the storing module 701 is used for receiving a plurality of order identifiers uploaded by a terminal, acquiring a user identifier and delivery address information corresponding to each of the order identifiers, and storing the user identifier and the delivery address information into an order master table; the screening module 702 is used for screening an order identifier to be parsed that lacks essential information in the delivery address information from the order master table; the adding module 703 is used for adding, in accordance with the corresponding relationship between each user identifier and each piece of detailed address information stored in an address library table, the essential information in the delivery address information corresponding to each of the order identifiers to be parsed so as to update the order master table; and the optimizing module 704 is used for performing path optimization on the basis of the updated delivery address information of each order in the order master table, and sending an optimization result to the terminal.

Optionally, the adding module 703 is further used for:
matching, for each of the order identifiers to be parsed, detailed address information corresponding to the order identifier to be parsed from the corresponding relationship between each user identifier and each piece of detailed address information stored in the address library table on the basis of the user identifier and the delivery address information corresponding to the order identifier to be parsed; and
adding, in accordance with the matched detailed address information, the essential information in the delivery address information corresponding to the order identifier to be parsed so as to update the order master table.

Optionally, the adding module 703 is further used for:
parsing the delivery address information corresponding to the order identifier to be parsed on the basis of a preset address writing rule if the matching result is null;
adding, in accordance with a parsing result, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

Optionally, the adding module 703 is further used for:
receiving the order identifier to be parsed uploaded by the terminal and address editing information corresponding thereto if there is a failure in parsing;
adding, in accordance with the address editing information, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

Optionally, the optimizing module 704 is further used for:
arranging each order in the order master table in an ascending order on the basis of the updated delivery address information of each order in the order master table to thereby generate a delivery queue.

Optionally, the optimizing module 704 is further used for:
arranging orders that lack essential information in the delivery address information in the order master table at the end of the delivery queue.

Optionally, the essential information includes at least one of a building number, a unit number, a floor number, and a room number.

It may be seen according to the aforesaid various embodiments that the embodiment of the disclosure solves the technical problem of low delivery efficiency in the existing art by a technical means of adding, in accordance with the corresponding relationship between each user identifier and each piece of detailed address information stored in an address library table, the essential information in the delivery address information corresponding to each order identifier to be parsed, and performing path optimization on the delivery address information after the addition of the essential information. The embodiment of the disclosure, which adds the essential information in the delivery address information by the corresponding relationship between each user identifier and each piece of detailed address information stored in an address library table, saves a step of determining a detailed address between the courier and the user, and thus improves the delivery efficiency of the courier; and further improves the delivery efficiency of the courier by performing path optimization on information such as a building number, a unit number, a floor number, and a room number.

It shall be noted that specific implementation contents of an apparatus for processing order data according to the disclosure have been described in detail in the method for processing order data described above, so no repeated contents are further described herein.

FIG. 8 is an exemplary diagram of a system architecture 800 to which a method of processing order data or an apparatus for processing order data according to an embodiment of the disclosure can be applied.

As shown in FIG. 8, the system architecture 800 may comprise terminal devices 801, 802, 803, a network 804, and a server 805. The network 804 is a medium for providing a communication link between the terminal devices 801, 802, 803 and the server 805. The network 804 may include various connection types, such as wired or wireless communication links, or fiber-optic cables.

The user may use the terminal devices 801, 802, 803 to interact with the server 805 through the network 804 to receive or send messages and so on. Various communication client applications, such as shopping applications, web browser applications, search applications, instant messaging tools, email clients, social platform software, and so on (only examples), may be installed on the terminal devices 801, 802, 803.

The terminal devices 801, 802, 803 may be various electronic devices having screens and supporting web browsing, including but not limited to smart phones, tablet computers, laptop portable computers, desktop computers, and so on.

The server 805 may be a server that provides various services, such as a background management server that provides support for shopping websites browsed by the user using the terminal devices 801, 802, 803 (only an example). The background management server may process, for example, analyze the received request for querying product information and other data, and feed the processing results (such as target push information and product information--only examples) back to the terminal devices.

It shall be noted that the method for processing order data provided by the embodiment of the disclosure is generally performed by the server 805, and correspondingly, the apparatus for processing order data is generally provided in the server 805.

It should be understood that the numbers of the terminal devices, the networks, and the servers in FIG. 8 are merely schematic. According to implementation requirements, there may be any numbers of terminal devices, networks, and servers.

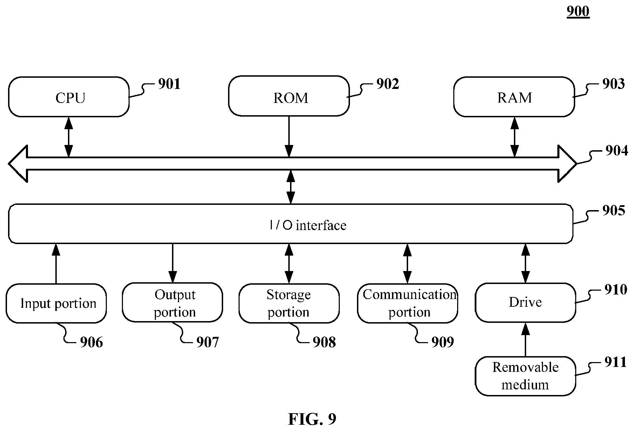

Reference is now made to FIG. 9, which shows a schematic diagram of a structure of a computer system 900 suitable for implementing a terminal device according to an embodiment of the disclosure. The terminal device shown in FIG. 9 is only an example, and shall not impose any limitation on the functions and the scope of use of the embodiment of the disclosure.

As shown in FIG. 9, the computer system 900 includes a central processing unit (CPU) 901, which may perform various appropriate actions and processes according to a program stored in a read-only memory (ROM) 902 or a program loaded from a storage portion 908 into a random access memory (RAM) 903. Various programs and data required for the operation of the system 900 are also stored in the RAM 903. The CPU 901, the ROM 902 and the RAM 903 are connected to each other through a bus 904. An input/output (I/O) interface 905 is also connected to the bus 904.

The following components are connected to the I/O interface 905: an input portion 906 including a keyboard, a mouse, and so on; an output portion 907 including a cathode ray tube (CRT), a liquid crystal display (LCD) and so on, and a speaker and so on; a storage portion 908 including a hard disk and so on; and a communication portion 909 including a network interface card such as a LAN card, a modem, and so on. The communication portion 909 performs communication processing via a network such as the Internet. A drive 910 is also connected to the I/O interface 905 according to requirements. A removable medium 911, such as a magnetic disk, an optical disk, a magneto-optical disk, a semiconductor memory, and so on, is installed on the drive 910 according to requirements so that a computer program read therefrom is installed in the storage portion 908 according to requirements.

In particular, according to the embodiment disclosed in the disclosure, the process described above with reference to the flowchart may be implemented as a computer software program. For example, the embodiment of the disclosure includes a computer program product, which includes a computer program carried on a computer-readable medium, the computer program containing a program code for performing the method shown in the flowchart. In such embodiment, the computer program may be downloaded and installed from the network through the communication portion 909, and/or installed from the removable medium 911. When the computer program is executed by the central processing unit (CPU) 901, the above functions defined in the system according to the disclosure are executed.

It shall be noted that the computer-readable medium shown in the disclosure may be a computer-readable signal medium or a computer-readable storage medium or any combination of the above two media. The computer-readable storage medium may be, for example, but not limited to, an electronic, magnetic, optical, electromagnetic, infrared, or semiconductor system, apparatus or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the disclosure, the computer-readable storage medium may be any tangible medium containing or storing a program, and the program may be used by or in combination with an instruction execution system, apparatus or device. In the disclosure, the computer-readable signal medium may include a data signal propagated in a baseband or propagated as a part of a carrier batch, in which a computer-readable program code is carried. Such propagated data signal may adopt many forms, including but not limited to electromagnetic signals, optical signals, or any suitable combination thereof. The computer-readable signal medium may be also any computer-readable medium other than the computer-readable storage medium, and the computer-readable medium may send, propagate, or transmit a program for use by or in connection with the instruction execution system, apparatus or device. The program code contained on the computer-readable medium may be transmitted using any appropriate medium, including but not limited to wireless, wire, optical cable, RF, and so on, or any suitable combination thereof.

The flowcharts and block diagrams in the figures illustrate architectures, functions and operations that may be implemented by systems, methods and computer programs according to various embodiments of the disclosure. In this regard, each block in the flowcharts or block diagrams may represent a module, a program segment, or a part of a code, which contains one or more executable instructions for implementing specified logic functions. It shall be also noted that in some alternative implementations, the functions labeled in the blocks may also occur in an order different from that labeled in the figures. For example, two successively represented blocks may actually be executed substantially in parallel, and they may sometimes be executed in a reverse order, which depends on the functions involved. It shall be also noted that each block in the block diagrams or flowcharts, and combinations of the blocks in the block diagrams or flowcharts may be implemented with a dedicated hardware-based system that performs specified functions or operations, or may be implemented with a combination of dedicated hardware and computer instructions.

The involved modules described in the embodiment of the disclosure may be implemented by software or hardware. The described modules may be also provided in a processor. For example, a description may be made as follows: a processor comprising a storing module, a screening module, an adding module and an optimizing module. The names of these modules do not form limitations of the modules themselves in some cases.

As another aspect, the disclosure also provides a computer-readable medium, which may be included in the devices described in the above embodiment, or may exist independently without being assembled into the devices. The above computer-readable medium carries one or more programs, and the one or more programs, when executed by one of the devices, cause the device to implement the following method: receiving a plurality of order identifiers uploaded by a terminal, acquiring a user identifier and delivery address information corresponding to each of the order identifiers, and storing the user identifier and the delivery address information in an order master table; screening an order identifier to be parsed that lacks essential information in the delivery address information from the order master table; adding, in accordance with the corresponding relationship between each user identifier and each piece of detailed address information stored in an address library table, the essential information in the delivery address information corresponding to each of the order identifiers to be parsed so as to update the order master table; and performing path optimization on the basis of the updated delivery address information of each order in the order master table, and sending an optimization result to the terminal.

According to the technical solution of the embodiment of the disclosure, thanks to adoption of a technical means of adding, in accordance with the corresponding relationship between each user identifier and each piece of detailed address information stored in an address library table, the essential information in the delivery address information corresponding to each order identifier to be parsed, and performing path optimization on the delivery address information after the addition of the essential information, the technical problem of low delivery efficiency in the existing art is overcome. The embodiment of the disclosure, which adds the essential information in the delivery address information by the corresponding relationship between each user identifier and each piece of detailed address information stored in an address library table, saves a step of determining a detailed address between the courier and the user, and thus improves the delivery efficiency of the courier; and further improves the delivery efficiency of the courier by performing path optimization on information such as a building number, a unit number, a floor number, and a room number.

The above specific implementation modes do not form limitations on the scope of protection of the disclosure. It shall be understood by those skilled in the art that various modifications, combinations, sub-combinations and substitutions may occur depending on design requirements and other factors. Any modification, equivalent replacement, improvement, and so on made within the spirit and principle of the disclosure shall be included in the scope of protection of the disclosure.

## Claims

1. A method for processing order data, comprising:
receiving a plurality of order identifiers uploaded by a terminal, acquiring a user identifier and delivery address information corresponding to each of the order identifiers, and storing the user identifier and the delivery address information in an order master table;
screening an order identifier to be parsed that lacks essential information in the delivery address information from the order master table;
adding, in accordance with the corresponding relationship between each user identifier and each piece of detailed address information stored in an address library table, the essential information in the delivery address information corresponding to each of the order identifiers to be parsed so as to update the order master table; and
performing path optimization on the basis of the updated delivery address information of each order in the order master table, and sending an optimization result to the terminal.

2. The method of claim 1, wherein adding, in accordance with the corresponding relationship between each user identifier and each piece of detailed address information stored in an address library table, the essential information in the delivery address information corresponding to each of the order identifiers to be parsed so as to update the order master table comprises:
matching, for each of the order identifiers to be parsed, detailed address information corresponding to the order identifier to be parsed from the corresponding relationship between each user identifier and each piece of detailed address information stored in the address library table on the basis of the user identifier and the delivery address information corresponding to the order identifier to be parsed; and
adding, in accordance with the matched detailed address information, the essential information in the delivery address information corresponding to the order identifier to be parsed so as to update the order master table.

3. The method of claim 2, wherein adding, in accordance with the corresponding relationship between each user identifier and each piece of detailed address information stored in an address library table, the essential information in the delivery address information corresponding to each of the order identifiers to be parsed so as to update the order master table further comprises:
parsing the delivery address information corresponding to the order identifier to be parsed on the basis of a preset address writing rule if the matching result is null;
adding, in accordance with a parsing result, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

4. The method of claim 3, wherein adding, in accordance with the corresponding relationship between each user identifier and each piece of detailed address information stored in an address library table, the essential information in the delivery address information corresponding to each of the order identifiers to be parsed so as to update the order master table further comprises:
receiving the order identifier to be parsed uploaded by the terminal and address editing information corresponding thereto if there is a failure in parsing;
adding, in accordance with the address editing information, the essential information in the delivery address information corresponding to the order identifier to be parsed so as to update the order master table; and
writing the corresponding relationship between the user identifier corresponding to the order identifier to be parsed and the delivery address information after the addition of the essential information into the address library table.

5. The method of claim 1, wherein performing path optimization on the basis of the updated delivery address information of each order in the order master table comprises:
arranging each order in the order master table in an ascending order on the basis of the updated delivery address information of each order in the order master table to thereby generate a delivery queue.

6. The method of claim 5, wherein performing path optimization on the basis of the updated delivery address information of each order in the order master table further comprises:
arranging orders that lack essential information in the delivery address information in the order master table at the end of the delivery queue.

7. The method of claim 1, wherein the essential information includes at least one of a building number, a unit number, a floor number, and a room number.

8. An apparatus for processing order data, comprising:
at least one processor configured to:
receive a plurality of order identifiers uploaded by a terminal, acquire a user identifier and delivery address information corresponding to each of the order identifiers, and
store the user identifier and the delivery address information in an order master table;
screen an order identifier to be parsed that lacks essential information in the delivery address information from the order master table;
add, in accordance with the corresponding relationship between each user identifier and each piece of detailed address information stored in an address library table, the essential information in the delivery address information corresponding to each of the order identifiers to be parsed so as to update the order master table; and
perform path optimization on the basis of the updated delivery address information of each order in the order master table, and send an optimization result to the terminal.

9. A computer-readable medium, on which a computer program is stored, wherein the program, when executed by a processor, implements the method according to any of claims 1-7.
